# EUROPEAN PATENT SPECIFICATION

(11) **EP 1 514 369 B1**
(45) Date of publication and mention of the grant of the patent: **22.08.2007**
(21) Application number: 03732840.8
(22) Date of filing: 05.06.2003
(51) Int. Cl.: H04B 17/00

(54) **RECEIVER SIGNAL STRENGTH INDICATION**
EMPFANGSSIGNALPEGELANGABE
INDICATION DE LA PUISSANCE D'UN SIGNAL RECEPTEUR

(30) Priority: 07.06.2002 EP 02077282
(43) Date of publication of application: 16.03.2005
(73) Proprietor: NXP B.V., 5656 AG Eindhoven (NL)
(72) Inventor: RUITENBURG, Leonardus, J., M., NL-5656 AA Eindhoven (NL); SENESCHAL, Francois, J., NL-5656 AA Eindhoven (NL); VAN SINDEREN, Jan, NL-5656 AA Eindhoven (NL); FORTUIN, Robbert, P., NL-5656 AA Eindhoven (NL)
(74) Representative: White, Andrew Gordon
(86) International application number: PCT/IB2003/002478
(87) International publication number: WO 2003/105374

(56) References cited:
- WO-A-92/17005
- US-A- 5 423 064

## Description

The invention relates to a receiver signal strength indication circuit, and to an integrated tuner comprising such a circuit.

The US standard DOCSYS 1.1 for cable modems prescribes that a receiver signal strength indication is sent from the cable modem to the head-end.

It is, inter alia, an object of the invention to provide an accurate and simple receiver signal strength indication. To this end, the invention provides a receiver signal strength indication as defined in the independent claims. Advantageous embodiments are defined in the dependent claims. In an advantageous embodiment, the receiver signal strength indication is determined in the tuner IC, so that there is no need for separate circuitry.

These and other aspects of the invention will be apparent from and elucidated with reference to the embodiments described hereinafter. Receiver signal strength indication circuits are disclosed in US 5 423 064 and WO 9 217 005.

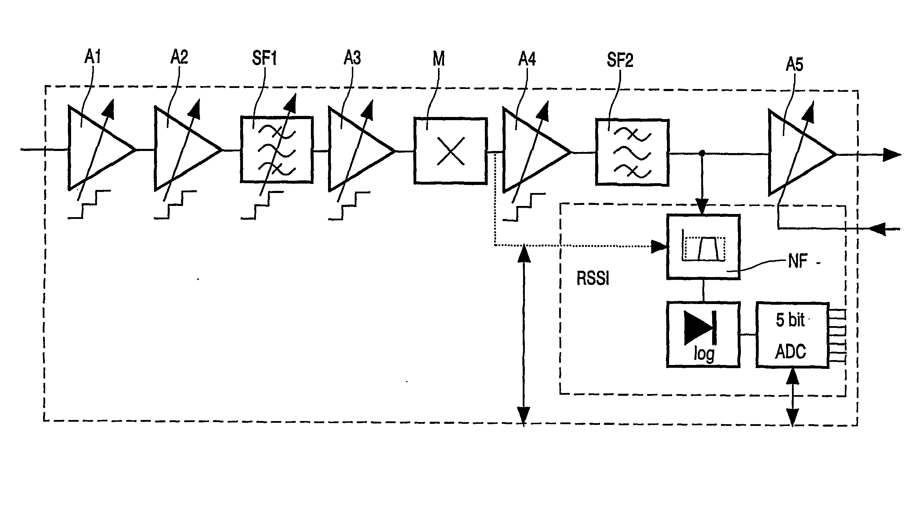

In the drawings, the sole figure shows an embodiment of a tuner IC , comprising a receiver signal strength indicator in accordance with the present invention.

The figure shows a simplified block diagram for the signal path of a tuner IC, which for receiver signal strength indication (RSSI) purpose has been extended with three blocks containing respectively 'narrow' band selectivity (NF), logarithmic level detection (log), and linear 5 bits AD-conversion.

The gain of four amplifiers A1, A2, A3, A4 can be controlled in steps only, while last amplifier A5 is continuously controlled. The last amplifier A5 has a 30 dB gain control range and its peak-to-peak output level is kept constant for optimum ADC performance in the channel decoder after the tuner. Based on this, the input signal level of the last amplifier A5 has a maximum input level variation of 30 dB, which in practice will certainly be smaller. It can be derived that, although wanted plus wanted signal is present at the input, the difference between maximum and minimum wanted signal level is less than 30 dB.

In the circuit added for RSSI, the narrow filter NF in parallel to the input of last amplifier A5 passes only part of the wanted signal spectrum to the logarithmic detector, while power from the adjacent channels will sufficiently be suppressed. Since the power of the wanted signal is equally distributed over the bandwidth, the partial spectrum still relates to the power of the wanted signal. The wanted signal power at filter input will vary not more than 30 dB, so the same holds for the output of the logarithmic detector log, which is the input of the linear 5 bit ADC. Since 5 bits corresponds with 32 levels, the 30 dB range can be read-out in steps < 1 dB, and is made available via an I2C bus.

### RSSI calibration and read-out.

In case an RF signal with known signal level is applied at the antenna input of a modem, the digitally controlled amplifiers A1-A4 will each be set to one of the possible discrete gain values, but these values may be not very accurate. Despite the smaller bandwidth of the logarithmic level detector log, a signal level will be measured with 1 dB resolution after these 'inaccurate' amplifier stages A1-A4, which is proportional to the wanted RF input signal level. Finally the RF as well as the detector signal level information together with the chosen amplifier settings can digitally be stored and serve as reference at other RF input levels. This measurement thus serves as absolute gain calibration point for the RSSI measurement.

With the same amplifier settings each 1 dB change of the RF level corresponds with 1dB change at the detector output. So from the level measured at the detector output, now in reverse direction the RF level can be determined now at the tuner / modem input.

The different gain settings per amplifier stage A1-A4, are according to the design 3 dB or 4 dB apart. Due to e.g. process spreads, these steps can be inaccurate as well. In that case further calibration is required for these steps by changing the gain setting for each amplifier stage independently, without change of RF input level. The logarithmic detector output measures now a level change in accordance with the actual gain step. This actual information can be stored for each gain stage independently, resulting in a completely calibrated input level range for RSSL

Due to frequency dependency of mainly the RF input filters, the calibration procedure needs to be repeated at different RF frequencies. This number of frequencies is expected to be at least equal to the number of RF filters. The filter shapes can possibly be compensated for in the calibration software. From simulation and process spreads finally follows the real number of frequency positions to be calibrated.

Since temperature effects on gain can very well be compensated in the logarithmic detector path, we assume that the absolute accuracy of the amplifiers is poor, but the stability over time and temperature is good.

Thus the RF input level can in future accurately be determined from the stored level information in combination with the earlier used gain settings of the digitally controlled amplifiers. The location of the memory can be outside the tuner IC in the modem, but the possibility of flash memory in future on board of the tuner IC can be considered as well.

The modem alignment procedure can be briefly described as follows:
apply single RF input signal at the different center frequencies of the tuner IC's RF filters; choose proper input level as well as gain settings for the amplifiers A1-A4 inside the tuner IC; and
store the corresponding wanted signal related 5 or 6 bit ADC output values.

The invention thus provides an integrated RSSI detector in a tuner IC. Based on a tuner concept for digital signal reception with a limited number of programmable gain-settings A1-A4, a receiver (RF) signal strength indicator (=RSSI) solution has been defined, which can fully be integrated in an RF tuner IC. Basic elements in this invention are the bandfilter NF, which passes only a part of the wanted signal spectrum at low-IF as being proportional with the total wanted signal spectrum, the logarithmic detector log for converting the wanted signal level to a dB-linear signal, and the calibration method based on the design. The invention can be used in receivers for digital reception, such as in cable modems. Relative gain (and level) changes can be adjusted afterwards or in factory. RF filter influence can be made software compensated. The solution relies on software and is independent of the decoder type. The discretely controlled amplifiers A1-A4 provide program / read-out gain settings, the RSSI circuit provides a relative level read-out accuracy of less than 1 dB, and the combination provides a pre-defined setting during a single signal modem calibration. The application needs not to be limited to a modem for digital data, as also a set-top box or TV receiver for digital TV can use this principle, although RSSI is not prescribed for these applications.

The embodiment of the tuner IC embodiment shown in the figure has a first selectivity filter between the amplifiers A2 and A3, a mixer M between the amplifiers A3 and A4, and a second selectivity filter SF2 between the amplifiers A4 and A5. Advantageously, the input of the RSSI circuit is coupled to the output of the second selectivity filter SF2, so that its measurement is not disturbed by irrelevant frequencies. Advantageously, the input of the RSSI filter is coupled to the output of the mixer M (preferably but not necessarily thru the second selectivity filter SF2), so that the RSSI circuit input is at a relatively low frequency. The mixer M converting from RF to low-IF is quite advantageous to enable narrow filtering inside the channel bandwidth. The narrow filter NF preferably selects 1-2 MHz from a 5-6 MHz bandwidth channel. The power inside the narrow spectrum of the wanted signal should relate to the wanted signal power; this condition is fulfilled with e.g. OFDM and QAM signals. Advantageously, only discretely controlled amplifiers A1-A4 are present in the path between in the tuner IC input and the RSSI circuit input, so that there is a clear relation between control voltage and amplification that does not change with time and/or in dependence on the temperature, so that an accurate calibration is possible.

It should be noted that the above-mentioned embodiments illustrate rather than limit the invention, and that those skilled in the art will be able to design many alternative embodiments without departing from the scope of the appended claims. Clearly, there is no need for four discretely controlled amplifiers A1-A4 at the indicated positions in the figure, because basically one such discretely controlled amplifier between the input of the tuner IC and the input of the RSSI circuit would suffice. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A receiver signal strength indication circuit comprising:
means (A1-A4) for discretely controlled amplifying an input signal;
means (NF, log, ADC) coupled to an output of the amplifying means (A1-A4) for furnishing a receiver signal strength indication.

2. A receiver signal strength indication circuit as claimed in claim 1, wherein the receiver signal strength indication furnishing means (NF, log, ADC) include a narrow filter (NF) for measuring a power of the input signal with reduced influence from neighboring channels.

3. An integrated tuner comprising a receiver signal strength indication circuit as claimed in claim 1, wherein the amplifying means (A1-A4, SF1, SF2, M) include selectivity filtering means (SF1, SF2).

4. An integrated tuner comprising a receiver signal strength indication circuit as claimed in claim 1, wherein the amplifying means (A1-A4, SF1, SF2, M) include a mixer (M).

## Patentansprüche

1. Empfängersignalstärke-Indikations-Schaltung mit
Mitteln (A1 - A4) zur diskret gesteuerten Verstärkung eines Eingangs-Signals,
Mitteln (NF, log, ADC) zum Bereitstellen einer Empfängersignalstärke-Indikation, welche mit einem Ausgang der Mittel zur Verstärkung (A1 - A4) verbunden sind.

2. Empfängersignalstärke-Indikations-Schaltung gemäß Anspruch 1, wobei die Mittel zur Bereitstellung einer Empfängersignalstärke-Indikation (NF, log, ADC) ein schmalbandiges Filter (NF) zur Messung einer Leistung des Eingangssignals mit verringerter Beeinflussung durch benachbarte Kanäle enthalten.

3. Integrierte Abstimmschaltung, welche über eine Empfängersignalstärke-Indikations-Schaltung gemäß Anspruch 1 verfügt, wobei die Mittel zur Verstärkung (A1 - A4, SF1, SF2, M) Selektivitäts-FilterMittel (SF1, SF2) umfassen.

4. Integrierte Abstimmschaltung, welche über eine Empfängersignalstärke-Indikations-Schaltung gemäß Anspruch 1 verfügt, wobei die Mittel zur Verstärkung (A1 - A4, SF1, SF2, M) einen Mischer (M) umfassen.

## Revendications

1. Circuit d'indication de l'intensité d'un signal reçu comprenant :
- des moyens (A1 à A4) pour amplifier un signal d'entrée par commande discrète ;
- des moyens (NF, log, CNA) couplés à une sortie des moyens d'amplification (A1 à A4) pour fournir une indication de l'intensité d'un signal reçu.

2. Circuit d'indication de l'intensité d'un signal reçu selon la revendication 1, dans lequel les moyens fournissant une indication de l'intensité d'un signal reçu (NF, log, CAN) comprennent un filtre à bande étroite (NF) pour mesurer une puissance du signal d'entrée avec une influence réduite des canaux voisins.

3. Syntoniseur intégré comprenant un circuit d'indication de l'intensité d'un signal reçu selon la revendication 1, dans lequel les moyens d'amplification (A1 à A4, SF1, SF2, M) comprennent des moyens de filtrage sélectifs (SF1, SF2).

4. Syntoniseur intégré comprenant un circuit d'indication de l'intensité d'un signal reçu selon la revendication 1, dans lequel les moyens d'amplification (A1 à A4, SF1, SF2, M) comprennent un mélangeur (M).
